(19) **Europäisches Patentamt / European Patent Office / Office européen des brevets**

(11) **EP 3 957 476 A1**

(12) **EUROPEAN PATENT APPLICATION**
published in accordance with Art. 153(4) EPC

(43) Date of publication:
**23.02.2022 Bulletin 2022/08**

(21) Application number: **20790741.1**

(22) Date of filing: **03.04.2020**

(51) International Patent Classification (IPC):
**B32B 27/00** (2006.01)       **B32B 27/40** (2006.01)
**C09J 5/04** (2006.01)        **C09J 175/02** (2006.01)

(52) Cooperative Patent Classification (CPC):
**B32B 27/00; B32B 27/40; C09J 5/04; C09J 175/02**

(86) International application number:
**PCT/JP2020/015311**

(87) International publication number:
**WO 2020/213433 (22.10.2020 Gazette 2020/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.04.2019   JP 2019080038**

(71) Applicant: **Mitsui Chemicals, Inc.**
**Tokyo 105-7122 (JP)**

(72) Inventors:
• **TAKANO, Ryo**
**Sodegaura-shi, Chiba 299-0265 (JP)**

• **UEMURA, Taichi**
**Sodegaura-shi, Chiba 299-0265 (JP)**
• **IMAI, Akihiro**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **ADHESIVE KIT AND METHOD FOR PRODUCING LAMINATED BODY**

(57)     An adhesive kit 1 separately includes a main agent layer 2 containing a polyamine component, and a curing agent layer 3 containing a polyisocyanate component. When the main agent layer 2 is reacted with the curing agent layer 3, the reactive parameter Pr exceeds 40% and the diffusion parameter Pd exceeds 15%.

FIG. 1A

FIG. 1B

FIG. 1C

**Description**

TECHNICAL FIELD

The present invention relates to an adhesive kit, and a method of producing a laminate. More specifically, the present invention relates to an adhesive kit, and a method of producing a laminate by using the adhesive kit.

BACKGROUND ART

Conventionally, honeymoon adhesives for which its main agent and its curing agent are separately prepared have been known.

To bond two adherends to each other by using a honeymoon adhesive, first, its main agent is applied to one of the adherends and its curing agent is separately applied to the other adherend. Then, the two adherends are bonded to each other so that the applied main agent and the applied curing agent are brought into contact with each other. By that, the main agent and cure agent are mixed together and the reaction (curing) of the mixed main agent and curing agent makes the two adherends adhere to each other.

As such a honeymoon adhesive, for example, a two-component urethane adhesive consisting of an A agent and a B agent has been proposed. The A agent includes a compound having isocyanate groups at both the terminals. The B agent includes a compound having amino groups at both the terminals. When the A agent applied to one of adherends contacts the B agent applied to the other adherend, a curing reaction therebetween starts (for example, see Patent Document 1 below).

Citation List

Patent Document

Patent Document 1: Japanese Unexamined Patent Publication No. 2003-171642

SUMMARY OF THE INVENTION

PROBLEM TO BE SOLVED BY THE INVENTION

In the two-component urethane adhesive of Patent Document 1, the isocyanate groups of the A agent react with the amino groups of the B agent. The reaction makes two adherends adhered together.

The high reactivity in such a reaction increases the initial adhesive force. The increased adhesive force forms a urea film at the interface of the A agent and B agent at the initial stage of the reaction. Thus, there is a disadvantage that the urea film inhibits the subsequent reaction, and the adhesive force (adhesive strength) does not develop at the later stage of the reaction.

The present invention provides an adhesive kit with an excellent initial adhesive force, and simultaneously with excellent adhesive strength, and a method of producing a laminate by using the adhesive kit.

MEANS FOR SOLVING THE PROBLEM

The present invention [1] includes an adhesive kit separately comprising: a main agent layer; and a curing agent layer, wherein the main agent layer contains a polyamine component, the curing agent layer contains a polyisocyanate component, a reactive parameter Pr represented by a following formula (1) exceeds 40% when the main agent layer is reacted with the curing agent layer, $Pr = (C_0 - C_{0.05})/C_0 \times 100$ (1) (in formula (1), Co represents an amount of isocyanate groups contained in the curing agent layer before the start of the reaction of the main agent layer and curing agent layer, and $C_{0.05}$ represents an amount of isocyanate groups contained in the curing agent layer at a time when 3 minutes have passed since the start of the reaction of the main agent layer and curing agent layer), and a diffusion parameter Pd represented by a following formula (2) exceeds 15% when the main agent layer is reacted with the curing agent layer, $Pd = (C_{0.05} - C_{24})/C_{0.05} \times 100$ (2) (in the above-described formula (2), $C_{0.05}$ represents the same as the $C_{0.05}$ of the formula (1) does, and $C_{24}$ represents an amount of isocyanate groups contained in the curing agent layer at a time when 24 hours have passed since the start of the reaction of the main agent layer and curing agent layer.) The present invention [2] includes the adhesive kit described in [1] above, wherein the polyisocyanate component has a number-average molecular weight of 1000 or more.

The present invention [3] includes the adhesive kit described in [1] or [2] above, wherein the polyamine component contains a diamine having a number-average molecular weight of 400 or more.

The present invention [4] includes the adhesive kit described in any one of the above-described [1] to [3], wherein the polyamine component contains a multifunctional polyamine having 3 or more functional groups.

The present invention [5] includes a method of producing a laminate produced by adhering a first adherend and a second adherend to each other with the adhesive kit described in any one of the above-described [1] to [4], the method comprising; a first step of forming the main agent layer on a surface of the first adherend; a second step of forming the curing agent layer on a surface of the second adherend; a third step of bonding the first adherend and second adherend to each other so that the main agent layer and curing agent layer are brought into contact with each other; and a fourth step of curing the main agent layer and curing agent layer.

EFFECTS OF THE INVENTION

The adhesive kit of the present invention separately includes a main agent layer including a polyamine component and a curing agent layer including a polyisocyanate component. The reactive parameter Pr of the reaction of the main agent layer and curing agent layer, namely, the consumption ratio of isocyanate groups at the initial stage of the reaction exceeds 40%.

Thus, the adhesive kit has an excellent initial adhesive force.

Meanwhile, in the adhesive kit of the present invention, the diffusion parameter Pd of the reaction of the main agent layer and curing agent layer, namely, the consumption ratio of isocyanate groups at the later stage of the reaction exceeds 15%.

Thus, the adhesive kit also has excellent adhesive strength.

The method of producing a laminate of the present invention uses the adhesive kit of the present invention to adhere a first adherend to a second adherend.

Thus, the laminate produced by the method of the present invention can improve the adhesive strength between the first adherend and the second adherend.

BRIEF DESCRIPTION OF THE DRAWINGS

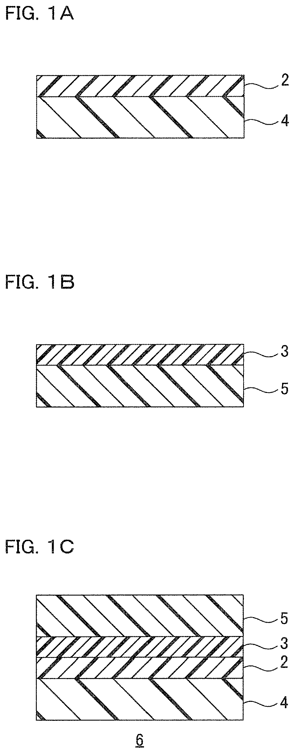

[FIG. 1] FIG. 1 is a schematic view showing an embodiment of an adhesive kit of the present invention and a method of producing a laminate of the present invention. FIG. 1A illustrates a first step of forming a main agent layer on a surface of a first adherend. FIG. 1B illustrates a second step of forming a curing agent layer on a surface of a second adherend. FIG. 1C illustrates a third step of bonding the first adherend to the second adherend so that the main agent layer and the curing agent layer are brought into contact with each other.

DESCRIPTION OF THE EMBODIMENTS

The embodiment of the adhesive kit of the present invention will be described with reference to FIG. 1.

An adhesive kit 1 is an adhesive kit to adhere a first adherend 4 (described below) and a second adherend 5 (described below) together, and separately includes a main agent layer 2 and a curing agent layer 3.

The main agent layer 2 is made of a main agent.

The main agent includes a polyamine component.

Examples of the polyamine component include diamines and multifunctional polyamines each having 3 or more functional groups.

The diamine is an organic compound having 2 amino groups. Examples thereof include: aromatic diamines such as 4,4'-diphenylmethane diamine, and tolylene diamine; araliphatic diamines such as 1,3- or 1,4-xylylene diamine, and mixtures thereof; alicyclic diamines such as 3-aminomethyl-3,5,5-trimethylcyclohexyl amine (also called isophoronediamine), 4,4'-dicyclohexylmethane diamine, 2,5 (2,6)-bis(aminomethyl)bicyclo[2.2.1] heptane, 1,4-cyclohexane diamine, 1-amino-3-aminomethyl-3,5,5-trimethylcyclohexane, bis-(4-aminocyclohexyl)methane, diaminocyclohexane, 3,9-bis(3-aminopropyl)-2,4,8,10-tetraoxaspiro[5.5]undecane, 1,3- and 1,4-bis(aminomethyl)cyclohexane, and mixtures thereof; aliphatic diamine such as ethylenediamine, propylenediamine, 1,3-trimethylenediamine, 1,4-tetramethylenediamine, 1,5-pentamethylenediamine, 1,6-hexamethylenediamine, 1,2-diaminoethane, 1,2-diaminopropane, and 1,3-diaminopentane; and polyoxy alkylene group-containing diamines such as polyoxyethylenediamine, and polyoxypropylene diamine.

The polyoxy alkylene group-containing diamine is also commercially available. More specifically, for example, JEFF AMINE products manufactured by Huntsman Corporation can be used.

Examples of the diamine also include a polyurea diamine that is a reaction product of the above-described polyoxy alkylene group-containing diamine (its number-average molecular weight is, for example, 200 or more, preferably 1000 or more and, for example, 5000 or less, preferably 3000 or less) and a polyisocyanate component (preferably, diisocyanate) described below.

Specifically, the polyurea diamine is produced by a reaction in a solvent (preferably, ethyl acetate) described below, for example, at 20°C or more and 30°C or less in nitrogen atmosphere for 1 hour or more and 6 hours or less so that the equivalent ratio of the isocyanate groups of the polyisocyanate component (preferably, diisocyanate) described below to the amino groups of the polyoxy alkylene group-containing diamine (isocyanate group/amino group) is, for example, 0.3 or more, preferably 0.5 or more and, for example, 1.1 or less, preferably, 0.7 or less.

As the polyurea diamine, preferably, a polyurea diamine that is a reaction product of polyoxypropylene diamine and 1,3-xylylene diisocyanate is used.

As the diamine, preferably, the polyoxy alkylene group-containing diamine, polyurea diamine, even more preferably, polyoxypropylene diamine, and polyurea diamine are used.

The diamine has a number-average molecular weight of, for example, 250 or more, preferably, 400 or more, more preferably, 1000 or more, even more preferably, 1500 or more, particularly preferably, 2500 or more, the most preferably, 3500 or more and, for example, 10000 or less, preferably, 8000 or less.

When the number-average molecular weight of the diamine is the above-described lower limit or more, as described in detail below, a urea film formed by the reaction of the amino groups of the polyamine component in the main agent layer 2 and the isocyanate groups of the polyisocyanate component in the curing agent layer 3 is softened, and the diffusion parameter Pd (described below) can be increased. As a result, the adhesive force (adhesive strength) can be improved.

The above-described number-average molecular weight is a number-average molecular weight measured by gel permeation chromatography in polystyrene standard calibration (the same will apply hereinafter).

The diamine also has a weight-average molecular weight of, for example, 300 or more, preferably, 1000 or more, more preferably, 2000 or more, even more preferably, 3000 or more, particularly preferably, 10000 or more, the most preferably, 30000 or more, particularly preferably, 40000 or more and, for example, 100000 or less, preferably, 60000 or less.

When the weight-average molecular weight of the diamine is the above-described lower limit or more, as described in detail below, the urea film formed by the reaction of the amino groups of the polyamine component in the main agent layer 2 and the isocyanate groups of the polyisocyanate component in the curing agent layer 3 is softened, and the diffusion parameter Pd (described below) can be increased. As a result, the adhesive force (adhesive strength) can be improved.

The above-described weight-average molecular weight is a weight-average molecular weight measured by gel permeation chromatography in polystyrene standard calibration (the same will apply hereinafter).

The multifunctional polyamine having 3 or more functional groups is an organic compound having 3 or more amino groups. Examples thereof include secondary amine-containing multifunctional amines such as diethylenetriamine, triethylenetetramine, and tetraethylenepentamine, and tertiary amine-containing multifunctional amine such as polyethyleneimine.

As the multifunctional polyamine having 3 or more functional groups, preferably, secondary amine-containing multifunctional amine and tertiary amine-containing multifunctional amine, more preferably tertiary amine-containing multifunctional amine, and even more preferably polyethyleneimine are used.

The number of the functional groups in the multifunctional polyamine having 3 or more functional groups is, for example, 3 or more, preferably, 4 or more.

The multifunctional polyamine having 3 or more functional groups has a weight-average molecular weight of, for example, 100 or more, preferably, 300 or more, more preferably, 1000 or more, even more preferably, 8000 or more and, for example, 50000 or less, preferably, 20000 or less.

When the weight-average molecular weight of the multifunctional polyamine having 3 or more functional groups is the above-described lower limit or more, as described in detain below, the reaction of the amino groups of the polyamine component in the main agent layer 2 and the isocyanate groups of the polyisocyanate component in the curing agent layer 3 increases the polarity and cohesion of the urea groups. Thus, the adhesive force (adhesive strength) to the substrate can be improved.

The polyamine components can be used singly, or can be used in combination of two or more.

The polyamine component, preferably, includes at least the diamine, and more preferably, includes the diamine and the multifunctional polyamine having 3 or more functional groups.

When the polyamine component includes the multifunctional polyamine having 3 or more functional groups, the initial adhesive force (described below) can be improved.

When the polyamine component includes the diamine and multifunctional polyamine having 3 or more functional groups, the blending ratio of the diamine to the total amount of the diamine and multifunctional polyamine having 3 or more functional groups is, for example, 90 mass% or more, preferably, 93 mass% or more, more preferably, 96 mass% or more, even more preferably, 98 mass% or more and, for example, 99.5 mass% or less. Meanwhile, the blending ratio of the multifunctional polyamine having 3 or more functional groups to the total amount of the diamine and multifunctional polyamine having 3 or more functional groups is, for example, 0.1 mass% or more, preferably, 2 mass% or more, more preferably, 4 mass% or more, even more preferably, 7 mass% or more and, for example, 10 mass% or less.

The main agent, if needed, can be diluted with a solvent.

Examples of the solvent include ketones such as acetone, methyl ethyl ketone, and cyclohexanone; nitriles such as acetonitrile; alkyl esters such as methyl acetate, ethyl acetate, butyl acetate, and isobutyl acetate; aliphatic hydrocarbons such as n-hexane, n-heptane, and octane; alicyclic hydrocarbons such as cyclohexane and methyl cyclohexane; aromatic hydrocarbons such as toluene, xylene, and ethyl benzene; glycol ether esters such as methyl cellosolve acetate, ethyl cellosolve acetate, and methyl carbitol acetate; ethers such as diethyl ether, tetrahydrofuran, and dioxane; halogenated aliphatic hydrocarbons such as methyl chloride, methylene chloride, chloroform, carbon tetrachloride, and dichloro ethane; and polar aprotic solvents such as N-methylpyrrolidone, dimethylformamide, N,N'-dimethylacetamide, and dimethyl sulfoxide. Preferably, alkyl esters are used, and more preferably, ethyl acetate is used.

The solvents can be used singly, or can be used in combination of two or more.

When the main agent is diluted with the solvent, the dilution ratio can freely be selected in terms of workability. The viscosity is within a range of, for example, 1 mPa·s or more and, for example, 10000 mPa·s or less.

Then, the main agent layer 2 is formed from the main agent.

To form the main agent layer 2, as illustrated in FIG. 1A, the main agent diluted with the solvent is applied on a surface of the first adherend 4, and, if needed, the solvent is dried and removed.

Examples of the method of applying the main agent include roll coating, kiss roll coating, gravure coating, reverse coating, roller brush coating, spray coating, dip roll coating, bar coating, knife coating, air knife coating, curtain coating, lip coating, and die coating.

The amount of the main agent to be applied is, for example, 0.1 g/m$^2$ or more, preferably, 0.6 g/m$^2$ or more, more preferably, 0.8 g/m$^2$ or more and, for example, 3.0 g/m$^2$ or less.

The first adherend 4 is an adherend to be adhered to a second adherend 5 (described below). Examples of the first adherend 4 include: polyester films such as polyethylene terephthalate; polyamide series films such as nylon 6, and nylon 66; polyolefin films such as polyethylene, and polypropylene; vinyl films such as polyvinyl alcohol, and polyvinyl chloride; resin films made of thermoplastic resin such as cellophane; metal films such as an aluminum film, a stainless-steel film, an iron film, a copper film, and a lead film; vapor-deposited films such as a metal vapor-deposited film, a silica vapor-deposited film, an alumina vapor-deposited film, and a silica-alumina multi-layered vapor-deposited film. Preferably, a polyolefin film is used. More preferably, polypropylene is used.

The first adherend 4 has a thickness of, for example, 3 μm or more, preferably, 10 μm or more and, for example, 200 μm or less, preferably, 100 μm or less.

In this manner, the main agent layer 2 is formed on the surface of the first adherend 4.

The curing agent layer 3 consists of the curing agent.

The curing agent includes the polyisocyanate component.

Examples of the polyisocyanate component include polyisocyanates such as aromatic polyisocyanate, araliphatic polyisocyanate, alicyclic polyisocyanate, and aliphatic polyisocyanate.

Examples of the aromatic polyisocyanate include aromatic diisocyanates such as 4,4'-,2,4'- or 2,2'-diphenylmethane diisocyanate or a mixture thereof (MDI), 2,4- or 2,6-tolylene diisocyanate or a mixture thereof (TDI), o-tolidine diisocyanate, 1,5-naphthalene diisocyanate (NDI), m-, or p-phenylene diisocyanate or a mixture thereof, 4,4'-diphenyl diisocyanate, and 4,4'-diphenylether diisocyanate.

Examples of the araliphatic polyisocyanate include araliphatic diisocyanates such as 1,3- or 1,4-bis(isocyanatomethyl)benzene (also called: 1,3- or 1,4-xylylene diisocyanate) or a mixture thereof (XDI), 1,3- or 1,4-tetramethylxylylene diisocyanate or a mixture thereof (TMXDI), and ω,ω'-diisocyanate-1,4-diethyl benzene.

Examples of the alicyclic polyisocyanate include alicyclic diisocyanates such as 3-isocyanatomethyl-3,5,5-trimethyl cyclohexyl isocyanate (isophorone diisocyanate, IPDI), 4,4'-, 2,4'- or 2,2'-methylene bis (cyclohexyl isocyanate) or a mixture thereof (H$_{12}$MDI), 1,3- or 1,4-bis (isocyanatomethyl)cyclohexane or a mixture thereof (H$_6$XDI), bis (isocyanatomethyl) norbornane (NBDI), 1,3-cyclopentene diisocyanate, 1,4-cyclohexane diisocyanate, 1,3-cyclohexane diisocyanate, methyl-2,4-cyclohexane diisocyanate, and methyl-2,6-cyclohexane diisocyanate.

Examples of the aliphatic polyisocyanate include aliphatic diisocyanates such as hexamethylene diisocyanate (hexane diisocyanate) (HDI), pentamethylene diisocyanate (pentane diisocyanate) (PDI), tetramethylene diisocyanate, trimethylene diisocyanate, 1,2-, 2,3- or 1,3-butylene diisocyanate, and 2,4,4- or 2,2,4-trimethylhexamethylene diisocyanate.

As the polyisocyanate, in terms of the reactivity, preferably, aromatic diisocyanate, and araliphatic polyisocyanate are used. More preferably, tolylene diisocyanate, and xylylene diisocyanate are used.

Examples of the polyisocyanate also include polyisocyanate derivatives, multimers of the above-described polyisocyanate (for example, dimers, trimers (for example, an isocyanurate modified product, and an iminooxadiazine dione modified product), pentamers, heptamers, etc.), allophanate modified products (for example, an allophanate modified product produced by reaction of the above-described polyisocyanate with a monohydric alcohol or a dihydric alcohol, etc.), polyol modified products (for example, a polyol modified product (alcohol adduct) produced by reaction of polyisocyanate with a trihydric alcohol (such as trimethylolpropane)), etc.), biuret modified products (for example, a biuret modified product produced by reaction of the above-described polyisocyanate with water or amines, etc.), urea modified products (for example, a urea modified product produced by reaction of the above-described polyisocyanate with diamine, etc.), oxadiazinetrione modified products (for example, an oxadiazinetrione produced by reaction of the above-described polyisocyanate with carbon dioxide, etc.), carbodiimide modified products (a carbodiimide modified product produced by decarboxylation condensation reaction of the above-described polyisocyanate, etc.), uretdione modified products, and uretonimine modified products.

As the polyisocyanate derivative, preferably, polyisocyanate derivatives each having 3 or more functional groups (specifically, an isocyanurate modified product, and a polyol modified product) are used, more preferably, a polyol modified product is used, and even more preferably, a trimethylolpropane modified product is used.

As the polyisocyanate component, preferably, the polyisocyanate derivative is used. More preferably, a polyol modified product of polyisocyanate (trimethylolpropane modified product) is used. Even more preferably, a polyol modified product of aromatic diisocyanate or araliphatic polyisocyanate (trimethylolpropane modified product). Particularly preferably, a trimethylolpropane modified product of tolylene diisocyanate, and a trimethylolpropane modified product of xylylene diisocyanate are used.

The polyisocyanate component has a number-average molecular weight of, for example, 900 or more, preferably, 1000 or more, more preferably, 1200 or more, even more preferably, 1500 or more and, for example, 10000 or less, preferably, 4000 or less, more preferably, 2500 or less.

The polyisocyanate component has a weight-average molecular weight of, for example, 1000 or more, preferably, 1600 or more, more preferably, 2000 or more, even more preferably, 8000 or more and, for example, 20000 or less, preferably, 12000 or less.

The curing agent can be diluted with the above-described solvent, as needed.

When the curing agent is diluted with the solvent, the dilution ratio can freely be selected in terms of workability. The viscosity is within a range of, for example, 1 mPa·s or more and, for example, 10000 mPa·s or less.

The curing agent layer 3 is formed of the curing agent.

To form the curing agent layer 3, as illustrated in FIG. 1B, the curing agent diluted with the solvent is applied on a surface of the second adherend 5, and, as needed, the solvent is dried and removed.

The method of applying the curing agent is the same as the above-described method of applying the main agent.

The amount of the curing agent to be applied is, for example, 0.1 g/m$^2$ or more and, for example, 3.0 g/m$^2$ or less, preferably, 1.5 g/m$^2$ or less, more preferably, 1.2 g/m$^2$ or less, even more preferably, 1.0 g/m$^2$ or less.

The second adherend 5 is an adherend to be adhered to the first adherend 4. Examples of the second adherend 5 include the same as the examples of the above-described first adherend 4. Preferably, a polyolefin film is used. More preferably, polypropylene is used.

The second adherend 5 has a thickness of, for example, 3 μm or more, preferably, 10 μm or more and, for example, 200 μm or less, preferably, 100 μm or less.

In this manner, the curing agent layer 3 is formed on the surface of the second adherend 5.

Then, the adhesive kit 1 that separately includes the main agent layer 2 disposed on (supported by) the first adherend 4 and the curing agent layer 3 disposed on (supported by) the second adherend 5 is composed.

For the adhesive kit 1, as described below, the main agent layer 2 and curing agent layer 3 are brought in contact with each other, thereby adhering the first adherend 4 and the second adherend 5 together.

When the main agent layer 2 and the curing agent layer 3 are brought into contact, the amino groups of the polyamine component in the main agent layer 2 reacts with the isocyanate groups of the polyisocyanate component in the curing agent layer 3.

The high reactivity in the reaction increases the initial adhesive force. The increased adhesive force forms a urea film at the interface of the main agent layer 2 and the curing agent layer 3 at the initial stage of the reaction. Thus, there is a disadvantage that the urea film inhibits the subsequent reaction, and the adhesive force (adhesive strength) does not develop at the later stage of the reaction.

Contrarily to the above, as described below, the adhesive kit 1 has a reactive parameter Pr represented by the following formula (1) at the reaction of the main agent layer 2 and curing agent layer 3, namely, a consumption ratio of isocyanate groups at the initial stage of the reaction (in other words, the consumption ratio of isocyanate groups at the time 3 minutes have passed since the start of the reaction to the amount of isocyanate groups before the start of the reaction) of more than 40%, preferably, 50% or more, more preferably, 60% or more.

$$Pr = (C_0 - C_{0.05})/C_0 \times 100 \qquad (1)$$

(In the above-described formula (1), Co represents the amount of isocyanate groups contained in the curing agent layer 3 before the start of the reaction of the main agent layer 2 and curing agent layer 3. $C_{0.05}$ represents the amount of isocyanate groups contained in the curing agent layer 3 at the time 3 minutes have passed since the start of the reaction of the main agent layer 2 and curing agent layer 3). The amount of the contained isocyanate groups can be obtained from the peak absorbance of the isocyanate groups in proximity to 2270 cm$^{-1}$ with a Fourier transform infrared spectrophotometer.

When Pr is the above-described lower limit or more, excellent reactivity of the main agent layer 2 and curing agent layer 3 is provided at the initial stage of the reaction. As a result, an excellent initial adhesive force is achieved.

Contrarily, when Pr is less than the above-described lower limit, the reactivity of the main agent layer 2 and curing agent layer 3 is low at the initial stage of the reaction. As a result, the initial adhesive force decreases.

As described below, the adhesive kit 1 has a diffusion parameter Pd represented by the following formula (2) at the reaction of the main agent layer 2 and curing agent layer 3, namely, a consumption ratio of isocyanate groups at the later stage of the reaction (in other words, the consumption ratio of isocyanate groups between the time 3 minutes have passed since the start of the reaction and the time 24 hours have passed since the start of the reaction to the amount of isocyanate groups at the time 3 minutes have passed since the start of the reaction) of more than 15%, preferably, 20% or more, more preferably, 50% or more, even more preferably, 60% or more and, for example, 95% or less.

$$Pd = (C_{0.05} - C_{24})/C_{0.05} \times 100 \qquad (2)$$

(In the above-described formula (2), $C_{0.05}$ represents the same as $C_{0.05}$ of the above-described formula (1) does. $C_{24}$ represents the amount of isocyanate groups contained in the curing agent layer 3 at the time 24 hours have passed since the start of the reaction of the main agent layer 2 and curing agent layer 3.) When Pd is the above-described lower limit or more, excellent diffusivity of the main agent layer 2 and curing agent layer 3 is provided at the later stage of the reaction. As a result, the adhesive force (adhesive strength) can be developed.

Contrarily, when Pd is less than the above-described lower limit, the diffusivity of the main agent layer 2 and curing agent layer 3 is low at the later stage of the reaction. As a result, the adhesive force (adhesive strength) is not developed.

In short, the adhesive kit 1 has the reactive parameter Pr and diffusion parameter Pd in the above-described predetermined ranges, thereby achieving an excellent initial adhesive force and an excellent adhesive force (adhesive strength).

As a result, the adhesive kit 1 is suitably used as an adhesive (laminate adhesive) used to produce a laminate film by adhering (bonding) a plurality of films to each other, specifically, as an adhesive (laminate adhesive) used to produce the packaging materials for various industries such as food, beverage, pharmaceutical drugs, and quasi-pharmaceutical products.

Next, a method of producing a laminate 6 produced using the adhesive kit 1 will be described with reference to FIG. 1.

The method includes a first step of forming the main agent layer 2 on the surface of the first adherend 4, a second step of forming the curing agent layer 3 on the surface of the second adherend 5, a third step of bonding the first adherend 4 and the second adherend 5 to each other so that the main agent layer 2 and the curing agent layer 3 are brought into contact with each other, and a fourth step of curing the main agent layer 2 and curing agent layer 3.

In the first step, as illustrated in FIG. 1A, the main agent layer 2 is formed on the surface of the first adherend 4.

To form the main agent layer 2 on the surface of the first adherend 4, as described above, the main agent is applied on the surface of the first adherend 4.

In this manner, the main agent layer 2 is formed on the surface of the first adherend 4.

Next, in the second step, as illustrated in FIG. 1B, the curing agent layer 3 is formed on the surface of the second adherend 5.

To form the curing agent layer 3 on the surface of the second adherend 5, as described above, the curing agent is applied on the surface of the second adherend 5.

In this manner, the curing agent layer 3 is formed on the surface of the second adherend 5.

Next, in the third step, as illustrated in FIG. 1C, the first adherend 4 and the second adherend 5 are bonded to each other so that the main agent layer 2 and curing agent layer 3 are brought into contact with each other.

In this manner, the main agent in the main agent layer 2 and the curing agent in the curing agent layer 3 are mixed so that they permeate each other.

Next, in the fourth step, the main agent layer 2 and curing agent layer 3 are cured.

To cure the main agent layer 2 and curing agent layer 3, for example, thermal compression bonding (hot-pressing) is carried out.

In the thermal compression bonding, specifically, the first adherend 4 and second adherend 5 are pressed from both sides in a thickness direction at, for example, 0.1 MPa or more and 50 MPa or less, and simultaneously heated to 30°C or more and 60°C or less. The time of the thermal compression bonding is, for example, 10 seconds or more and 120 seconds or less.

In this manner, the main agent layer 2 and curing agent layer 3 are reacted and cured.

At the time, the equivalent ratio of the isocyanate groups of the polyisocyanate component in the main agent layer 2 relative to the amino groups of the polyamine component in the curing agent layer 3 (isocyanate group/amino group) is, for example, 0.6 or more, preferably, 1.0 or more and, for example, 2 or less.

In this manner, the first adherend 4 and second adherend 5 are adhered to each other, thereby producing the laminate 6.

The laminate 6 is obtained by adhering the first adherend 4 and second adherend 5 to each other by using the above-described adhesive kit 1.

Thus, in the laminate 6, the adhesive force (adhesive strength) between the first adherend 4 and second adherend 5 can be improved.

In the above description, the adhesive kit 1 separately includes the main agent layer 2 disposed on (supported by) the first adherend 4 and the curing agent layer 3 disposed on (supported by) the second adherend 5. The dispositions are not limited to the above. In other words, in the adhesive kit 1, the body supporting each of the main agent layer 2 and curing agent layer 3 is not especially limited.

In other words, in the adhesive kit 1, as long as each of the main agent layer 2 and curing agent layer 3 is formed into a layer, for example, the main agent layer 2 and/or curing agent layer 3 may be formed on (supported by) a surface of a releasable film (not illustrated).

In such a case, in the above-described first step and/or second step, the main agent layer 2 and/or curing agent layer 3 are/is transferred to the first adherend 4 and/or second adherend 5, thereby forming the main agent layer 2 and/or curing agent layer 3 on the surface(s) of the first adherend 4 and/or second adherend 5.

Examples

The specific numeral values used in the description below, such as mixing ratios (contents), physical property values, and parameters can be replaced with the corresponding mixing ratios (contents), physical property values, and parameters in the above-described "DESCRIPTION OF EMBODIMENTS", including the upper limit values (numeral values defined with "or less", and "less than") or the lower limit values (numeral values defined with "or more", and "more than"). The "parts" and "%" are based on mass unless otherwise specified.

1. Details of Components

Each component used in each of Examples and Comparative Examples will be described below. JEFFAMINE D-400: polyoxypropylene diamine, a number-average molecular weight of 300, a weight-average molecular weight of 400, manufactured by Huntsman Corporation JEFFAMINE D-2000: polyoxypropylene diamine, a number-average molecular weight of 1400, a weight-average molecular weight of 2000, manufactured by Huntsman Corporation EPOMIN SP-003: polyethyleneimine, a weight-average molecular weight of 300, manufactured by NIPPON SHOKUBAI CO., LTD.

EPOMIN SP-018: polyethyleneimine, a weight-average molecular weight of 1800, manufactured by NIPPON SHOKUBAI CO., LTD.

EPOMIN SP-200: polyethyleneimine, a weight-average molecular weight of 10000, manufactured by NIPPON SHOKUBAI CO., LTD.

TAKENATE A-3: a trimethylolpropane modified product of tolylene diisocyanate, an ethyl acetate solution with a solid content concentration of 75 mass%, a number-average molecular weight of 1000, a weight-average molecular weight of 1500, manufactured by Mitsui Chemicals, Inc.

TAKENATE A-5: an aromatic isocyanate derivative, solid content concentration 80 mass%, an ethyl acetate solution, a number-average molecular weight of 2100, a weight-average molecular weight of 10000, manufactured by Mitsui Chemicals, Inc.

TAKENATE A-10: a trimethylolpropane modified product of xylylene diisocyanate, solid content concentration 75 mass%, an ethyl acetate solution, a number-average molecular weight of 1300, a weight-average molecular weight of 1700, manufactured by Mitsui Chemicals, Inc. TAKENATE A-260: an aromatic isocyanate derivative, solid content concentration 100 mass%, a number-average molecular weight of 3000, a weight-average molecular weight of 13000, manufactured by Mitsui Chemicals, Inc.

TAKENATE A-65: a biuret modified product of hexamethylene diisocyanate, solid content 100 mass%, a number-average molecular weight of 1200, a weight-average molecular weight of 1500, manufactured by Mitsui Chemicals, Inc.

2. Production of Polyurea diamine

Production Example 1

753 parts by mass of JEFFAMINE D-2000 (polyoxypropylene diamine) was put into a reactor, and stirred while being cooled with water. A mixture solution of 47 parts by mass of 1,3-xylylene diisocyanate (the product name TAKENATE T-500, manufactured by Mitsui Chemicals, Inc.) and 200 parts by mass of ethyl acetate was dropped therein, taking 15 minutes (NCO/NH$_2$ = 0.66). Thereafter, the obtained reaction solution (with a solid content concentration of 80 mass%) was further reacted in nitrogen atmosphere for two hours, thereby producing polyurea diamine.

3. Production of Adhesive kit and Laminate

Example 1

The polyurea diamine of Production Example 1 was prepared as a polyamine component.
Then, the polyurea diamine of Production Example 1 was applied on a surface of CCP (a non-oriented polypropylene film, the product name RXC-22, a thickness of 60 μm, manufactured by Mitsui Chemicals Tohcello, Inc.) (the applied amount (solid content) of 1.8 g/m$^2$) and thereafter dried. In this manner, a main agent layer was produced.
Separately, TAKENATE A-3 (a trimethylolpropane modified product of tolylene diisocyanate) was prepared as a polyisocyanate component.
Then, the TAKENATE A-3 was applied on a surface of CCP (a non-oriented polypropylene film a non-oriented polypropylene film, the product name RXC-22, a thickness of 60 μm, manufactured by Mitsui Chemicals Tohcello, Inc.) (the applied amount (solid content) of 0.2 g/m$^2$). In this manner, a curing agent layer was produced.
In this manner, an adhesive kit was produced.
Next, the main agent layer and curing agent layer were bonded to each other so that they were brought into contact with each other, and compressively bonded for 30 seconds while being heated to 50°C with a hot press machine.
In this manner, a laminate was produced.
The produced laminate was put together with a silica gel into a vessel, sealed and preserved at 25°C.

Example 2-Example 13, and Comparative Example 1-Comparative Example 3

Except that the polyamine component and polyisocyanate component were changed according to Table 1, each of the adhesive kits and laminates was obtained in the same manner as in Example 1.

4. Evaluation

(Reactive parameter Pr and Diffusion parameter Pd)

CCP and a film made by applying the curing agent on CCP were prepared to measure the light absorbance of the isocyanate groups in proximity to 2270 cm$^{-1}$ with a Fourier transform infrared spectrophotometer (FT-IR). From the difference between the light absorbance of the film made by applying the curing agent on CCP and the light absorbance of the CCP, the amount (Co) of isocyanate groups contained in the curing agent layer before the start of the reaction of the main agent layer and curing agent layer was obtained.
Further, the curing agent layer was measured with the FT-IR at the time 3 minutes had passed and at the time 24 hours had passed since the production of the laminate. Then, the light absorbance at 2273 cm$^{-1}$ at each of the times was calculated to obtain the amounts of the contained isocyanate groups (C$_{0.05}$, and C$_{24}$).
From the obtained Co, C$_{0.05}$, and C$_{24}$, based on the above-described formulas (1) and (2), the reactive parameter Pr and diffusion parameter Pd were calculated. The results are shown in Table 1.

(Number-average molecular weight and Weight-average molecular weight)

40 mg of the main agent and (methyl urethanized) curing agent used in each of Examples and Comparative Examples was dissolved in 4 mL of tetrahydrofuran and prepared as a 1 mass/volume% solution. Thereafter, the solution was measured under the following conditions by gel permeation chromatography (GPC), and its number-average molecular weight and weight-average molecular weight were measured in polystyrene standard calibration. The results are shown in Table 1.

Analyzer: Alliance (Waters)

Pump: Alliance e 2695 (Waters)
Detector: 2414 differential refractive index detector (Waters)
Column: Plgel GUARD + Plgel 5 $\mu$m Mixed-C $\times$ 3 units (50 $\times$ 7.5 mm, 300 $\times$ 7.5 mm)
Mobile phase: tetrahydrofuran
Column flow rate: 1 mL/min
Sample concentration: 1 mass/volume%
Injection amount: 100 $\mu$L
Measurement temperature: 40°C
System correction
Name of Standard substance: polystyrene
Method of creating the standard curve: Using TSK standard polystyrenes varying in molecular weight and manufactured by Tosoh Corporation, a graph showing the retention time and molecular weight was created.
Injection amount: 100 $\mu$L
Injection concentration: 10 mg/mL

(Peel test)

The T-peel strength of each of the laminates in Examples and Comparative Examples was measured at each of the times when 1 hour has passed, 24 hours have passed, and 168 hours have passed since the production of the laminate.

Specifically, the T-peel strength was measured by a T-peel test (in conformity with JIS K 6854) under the conditions of a test piece with a width of 15 mm, a tensile rate of 300mm/min, and 24°C. The results are shown in Table 1.

Table 1

| s, Comparative Examples No. | | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp. Ex. 1 | Co. Ex |
|---|---|---|---|---|---|---|---|---|---|---|---|---|---|---|---|---|---|
| Polyamine component | Diamine | Polyurea diamine (mass%) | 100 | 100 | 100 | 100 | 100 | - | 99 | 97.5 | 95 | 97.5 | 97.5 | 97.5 | 97.5 | - | |
| | | JEFFAMINE D-400 (mass%) | - | - | - | | - | - | - | - | | - | - | - | - | 100 | 1 |
| | | JEFFAMINE D-2000 (mass%) | - | - | - | | - | 100 | - | - | | - | - | - | - | - | |
| | | Number-average mdecular weight | 4000 | 4000 | 4000 | 4000 | 4000 | 1400 | 4000 | 4000 | 4000 | 4000 | 4000 | 4000 | 4000 | 300 | 3 |
| | | Weight-average molecular weight | 43000 | 43000 | 43000 | 43000 | 43000 | 2000 | 43000 | 43000 | 43000 | 43000 | 43000 | 43000 | 43000 | 400 | 4 |
| | Multifunctional polyamine | EPOMIN SP-003 (mass%) | - | - | - | | - | - | - | - | | 2.5 | - | - | - | - | |
| | | EPOMIN SP-018 (mass%) | - | - | - | - | - | - | - | - | | - | 2.5 | - | - | | |
| | | EPOMIN SP-200 (mass%) | - | - | - | | - | - | 1 | 2.5 | 5 | - | - | 2.5 | 2.5 | - | |
| | | Weight-average mdecular weight | - | - | - | | - | - | 10000 | 10000 | 10000 | 300 | 100 | 10000 | 10000 | - | |
| Applied amount (solid content) (g/m²) | | | 1.8 | 1.6 | 1.5 | 1.4 | 1.8 | 1.1 | 1.8 | 1.6 | 1.2 | 1.4 | 1.4 | 1.5 | 1.6 | 0.7 | 0 |
| Polyisocyanate component | | TAKENATE A-3 mass%) | 100 | - | - | | - | - | - | - | - | - | - | - | - | 100 | |
| | | TAKENATE A-5 (mass%) | - | 100 | - | | - | 100 | 100 | 100 | 100 | 100 | 100 | 100 | 100 | - | |
| | | TAKENATE A-10 (mass%) | - - | - - | 100 | - | - - | - - | - - | - - | | - - | - - | - - | - - | - - | 1 |
| | | TAKENATE A-260 (mass%) | - - | - - | - - | 100 | - | - - | - - | - - | | | | | | | |
| | | TAKENATE A-65 (mass%) | - | - | - | - | 100 | | | | | - | - | - | - | - | - |
| | | Number-average molecular weight | 1000 | 2100 | 1300 | 3000 | 1200 | 2100 | 2100 | 2100 | 2100 | 2100 | 2100 | 2100 | 2100 | 1000 | 13 |
| | | Weight-average molecular weight | 1500 | 10000 | 1700 | 13000 | 1500 | 10000 | 10000 | 10000 | 10000 | 10000 | 10000 | 10000 | 10000 | 1500 | 17 |
| Applied amount (solid content) (g/m²) | | | 0.2 | 0.4 | 0.4 | 0.5 | 0.1 | 0.9 | 0.6 | 0.6 | 0.6 | 0.6 | 0.5 | 0.3 | 0.3 | 1.2 | 1 |
| nt ratio (isocyanate group/amino group) | | | 1.34 | 1.27 | 1.33 | 1.25 | 1.47 | 1.32 | 1.29 | 1.22 | 1.22 | 1.25 | 1.24 | 0.83 | 0.68 | 1.35 | 1 |

(continued)

| Examples, Comparative Examples No. | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp. Ex. 1 | Comp. Ex. 2 | Comp. Ex. 3 |
|---|---|---|---|---|---|---|---|---|---|---|---|---|---|---|---|---|---|
| Reactive parameter Pr (%) | | 87 | 89 | 87 | 83 | 93 | 53 | 70 | 71 | 71 | 62 | 70 | 90 | 92 | 3 | 36 | 42 |
| Diffusion parameter Pd (%) | | 67 | 82 | 69 | 77 | 57 | 17 | 57 | 73 | 59 | 50 | 60 | 82 | 84 | 1 | 28 | 9 |
| Evaluation | Peel strength at the time when 1 hour has passed (N/15mm) | 1.3 | 1.7 | 2.4 | 2.3 | 1.5 | 1.8 | 4.5 | 9.4 | 4.2 | 5.3 | 4.8 | 4.0 | 5.6 | 0.1 | 0.1 | 1.1 |
| | Peel strength at the time when 24 hour has passed (N/15mm) | 3.8 | 9.4 | 8 | 3.4 | 9.3 | 7 | 7 | 11.5 | 6.6 | 6.7 | 9.6 | 6.0 | 6.2 | 0.1 | 0.1 | 3.0 |
| | Peel strength at the time when 168 hour has passed (N/15mm) | 5.2 | More than 13 | 8 | 5.8 | More than 13 | More than 13 | 8 | More than 13 | 7.6 | 8.1 | 9.8 | 7.5 | 7.8 | 0.1 | 0.1 | 3.5 |

13

While the illustrative embodiments of the present invention are provided in the above description, such is for illustrative purpose only and it is not to be construed restrictively. Modification and variation of the present invention that will be obvious to those skilled in the art is to be covered by the following claims.

Industrial Applicability

The adhesive kit and method of producing a laminate of the present invention can suitably be used in various industries such as food, beverage, pharmaceutical drugs and quasi-pharmaceutical products.

Description of Reference Numerals

1    adhesive kit
2    main agent layer
3    curing agent layer
4    first adherend
5    second adherend
6    laminate

**Claims**

1.   An adhesive kit separately comprising:

a main agent layer; and
a curing agent layer,
wherein the main agent layer contains a polyamine component,
the curing agent layer contains a polyisocyanate component,
a reactive parameter Pr represented by a following formula (1) exceeds 40% when the main agent layer is reacted with the curing agent layer,

$$Pr = (C_0 - C_{0.05})/C_0 \times 100 \qquad (1)$$

(in formula (1), Co represents an amount of isocyanate groups contained in the curing agent layer before the start of the reaction of the main agent layer and curing agent layer, and $C_{0.05}$ represents an amount of isocyanate groups contained in the curing agent layer at a time when 3 minutes have passed since the start of the reaction of the main agent layer and curing agent layer), and
a diffusion parameter Pd represented by a following formula (2) exceeds 15% when the main agent layer is reacted with the curing agent layer,

$$Pd = (C_{0.05} - C_{24})/ C_{0.05} \times 100 \qquad (2)$$

(in the above-described formula (2), $C_{0.05}$ represents the same as the $C_{0.05}$ of the formula (1) does, and $C_{24}$ represents an amount of isocyanate groups contained in the curing agent layer at a time when 24 hours have passed since the start of the reaction of the main agent layer and curing agent layer.)

2.   The adhesive kit according to Claim 1, wherein the polyisocyanate component has a number-average molecular weight of 1000 or more.

3.   The adhesive kit according to Claim 1, wherein the polyamine component contains a diamine having a number-average molecular weight of 400 or more.

4.   The adhesive kit according to Claim 1, wherein the polyamine component contains a multifunctional polyamine having 3 or more functional groups.

5. A method of producing a laminate produced by adhering a first adherend and a second adherend to each other with the adhesive kit according to any one of Claims 1 to 4, the method comprising;

a first step of forming the main agent layer on a surface of the first adherend;
a second step of forming the curing agent layer on a surface of the second adherend;
a third step of bonding the first adherend and second adherend to each other so that the main agent layer and curing agent layer are brought into contact with each other; and
a fourth step of curing the main agent layer and curing agent layer.

FIG. 1A

FIG. 1B

FIG. 1C

6

| | **INTERNATIONAL SEARCH REPORT** | International application No. |
|---|---|---|
| | | PCT/JP2020/015311 |

**A. CLASSIFICATION OF SUBJECT MATTER**
B32B 27/00(2006.01)i; B32B 27/40(2006.01)i; C09J 5/04(2006.01)i; C09J 175/02(2006.01)i
FI: C09J175/02; C09J5/04; B32B27/00 A; B32B27/40
According to International Patent Classification (IPC) or to both national classification and IPC

**B. FIELDS SEARCHED**

Minimum documentation searched (classification system followed by classification symbols)
B32B27/00; B32B27/40; C09J5/04; C09J175/02

Documentation searched other than minimum documentation to the extent that such documents are included in the fields searched

| Published examined utility model applications of Japan | 1922–1996 |
|---|---|
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 52-57269 A (HENKEL & CIE GMBH) 11.05.1977 (1977-05-11) claims, page 2, upper left column, line 20 to page 3, lower right column, line 4, page 3, lower right column, line 15 to page 4, upper left column, line 6, examples 1-3 | 1-5 |
| A | JP 2-51576 A (MITSUI TOATSU CHEMICALS, INC.) 21.02.1990 (1990-02-21) entire text | 1-5 |
| A | JP 2017-502103 A (NOLAX AG) 19.01.2017 (2017-01-19) entire text | 1-5 |
| A | JP 10-130615 A (TOYO-MORTON, LTD.) 19.05.1998 (1998-05-19) entire text | 1-5 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 June 2020 (04.06.2020) | 16 June 2020 (16.06.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

| International application no. |
| --- |
| PCT/JP2020/015311 |

| Patent Documents referred in the Report | Publication Date | Patent Family | Publication Date |
| --- | --- | --- | --- |
| JP 52-57269 A | 11 May 1977 | GB 1547480 A<br>claims, page 1, line 35 to page 3, line 27, page 3, lines 37-51, examples 1-3<br>US 4184005 A<br>DE 2549371 A1<br>FR 2330751 A1<br>BE 847966 A<br>CH 606374 A<br>AT 813276 A<br>NL 7611354 A<br>SE 7611436 A<br>FI 762944 A<br>CA 1080600 A<br>DK 463076 A<br>IT 1068429 A<br>ZA 7606602 A | |
| JP 2-51576 A | 21 Feb. 1990 | (Family: none) | |
| JP 2017-502103 A | 19 Jan. 2017 | US 2016/0280976 A1<br>Whole Document<br>WO 2015/071074 A1<br>EP 2871194 A1<br>CN 105722881 A | |
| JP 10-130615 A | 19 May 1998 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003171642 A